# EUROPÄISCHE PATENTSCHRIFT

(11) **EP 0 979 752 B1**
(45) Veröffentlichungstag und Bekanntmachung des Hinweises auf die Patenterteilung: **01.12.2004**
(21) Anmeldenummer: 99114711.7
(22) Anmeldetag: 28.07.1999
(51) Int. Cl.: B60N 2/28

(54) **Sitzgestell eines Fahrzeugsitzes mit einem Sitzträger, der zwei Seitenteile und eine rückwärtige Traverse hat**
Vehicle seat frame with a seat support with two side parts and a rear crossbar
Monture de siège de véhicule à un support de siège avec deux éléments latéraux et une traverse arrière

(30) Priorität: 12.08.1998 DE 29814444 U
(43) Veröffentlichungstag der Anmeldung: 16.02.2000
(73) Patentinhaber: C. Rob. Hammerstein GmbH & Co.KG, 42699 Solingen (DE)
(72) Erfinder: Frohnhaus, Ernst-Reiner, 42653 Solingen (DE); Becker, Burckhard, 42655 Solingen (DE); Beneker, Wilfried, Dr., 42799 Leichlingen (DE)
(74) Vertreter: Bauer, Wulf, Dr.

(56) Entgegenhaltungen:
- EP-A- 0 590 237
- EP-A- 0 694 437
- EP-A- 0 846 591
- US-A- 4 911 352

## Beschreibung

Die Erfindung bezieht sich auf ein Sitzgestell eines Fahrzeugsitzes mit einem Sitzträger, der zwei Seitenteile und eine rückwärtige Traverse hat.

Nach dem Stand der Technik werden Sitzgestelle als Schweißkonstruktionen ausgeführt. Die beiden Seitenteile sind also jeweils mit der rückwärtigen Traverse verschweißt. Zumeist ist auch eine vordere Traverse entsprechend angeschweißt. Die Schweißverbindungen erfolgen beispielsweise über Punktschweißungen. Dies führt allgemein zu einer stabilen, den praktischen Ansprüchen entsprechenden Konstruktion.

Nachteilig bei einer derartigen Schweißkonstruktion des Sitzgestells der eingangs genannten Art ist jedoch, dass Änderungen am Sitzgestell nicht mehr vorgenommen werden können. Will man beispielsweise eine Traverse mit Befestigungsmitteln für eine Kleinkindaufnahme, beispielsweise eine Schale, in der ein Baby liegen kann, ausstatten, so müssen Arbeiten an der Traverse selbst vorgenommen werden, beispielsweise Bohrungen. Dies führt aber nicht zu einer ordnungsgemäßen Fixierung. Insbesondere ist es praktisch nicht möglich, Aufnahmevorrichtungen für genormte Kleinkindaufnahmen, insbesondere sogenannte Isofix-Bügel, nachzurüsten.

Ein Sitzgestell mit verschraubter rückwärtiger Traverse ist z.B. aus der US 4 911 352 A bekannt.

Die Erfindung hat es sich nun zur Aufgabe gemacht, ein Sitzgestell eines Fahrzeugsitzes dahingehend weiter zu entwickeln, dass nachträglich eine Traverse ausgetauscht und durch eine Traverse mit Haltemitteln für eine Kleinkindaufnahme, insbesondere mit sogenannten Isofix-Bügeln, ausgestattet werden kann.

Diese Aufgabe wird ausgehend von dem Sitzgestell der eingangs genannten Art dadurch gelöst, dass die Traverse lösbar mit den beiden Seitenteilen verbunden ist und dass zumindest zwei unterschiedliche Traversen vorgesehen und alternativ einsetzbar sind, nämlich eine normale Traverse und eine Traverse, die mit Bügeln für eine Kleinkindaufnahme, insbesondere eine sogenannte Isofix-Anbindung, ausgestattet ist.

Erfindungsgemäß ist das Sitzgestell also zumindest im Bereich der Verbindung zwischen den beiden Seitenteilen und der Traverse nicht mehr als Schweißkonstruktion ausgeführt, vielmehr sind die beiden Seitenteile mit der rückwärtigen Traverse lösbar verbunden. Hierzu sind beispielsweise im Seitenteil im rückwärtigen Bereich Bohrungen vorgesehen, denen entsprechende Bohrungen in der rückwärtigen Traverse entsprechen. Durch die Bohrungen werden Schrauben gesteckt. Auf diese Weise kann die Traverse auch nachträglich ausgetauscht werden, sie kann beispielsweise gegen eine Traverse mit Isofix-Bügeln getauscht werden. Dabei ist es nicht notwendig, die alte Traverse irgendwie zu bearbeiten oder eine Schweißverbindung zu lösen.

Die Tatsache, dass das Sitzgestell im wesentlichen modular aufgebaut ist, hat aber noch weitere Vorteile. So ist es möglich, mindestens eine Querwelle zwischen den beiden Seitenteilen zu montieren, ohne dass es hierfür besonderer Montagehilfen, wie bei Schweißkonstruktionen üblich, bedarf.

Hierzu wird vorgeschlagen, dass mindestens ein Seitenteil eine - vorzugsweise nach unten offene - Aufnahmebucht hat, die die Querwelle frei aufnimmt, dass neben der Aufnahmebucht erste Befestigungsmittel im Seitenteil vorgesehen sind und dass die Querwelle von einem Lagerteil umgriffen wird, das die Lagerung der Querwelle übernimmt, die Aufnahmebucht überbrückt und den ersten Befestigungsmitteln entsprechende zweite Befestigungsmittel ausbildet. Auf diese Weise ist es möglich, die Querwelle nachträglich zu montieren, wenn schon die Traverse mit den beiden Seitenteilen verbunden ist.

Dabei ergibt sich auch die Möglichkeit, die Querwelle vor ihrer Montage an den Seitenwänden mit zwei Verstellarmen und einem Antriebsteil zu verbinden. Auf diese Weise kann also eine fertig konfektionierte Querwelle mit Zubehör erstellt und erst später montiert werden.

In einer bevorzugten Ausführung befindet sich mindestens ein Verstellarm auf der Außenseite des zugehörigen Seitenteils. Weiterhin ist es vorteilhaft, dass sich ein Lagerteil zwischen einem Verstellarm und einem Antriebsteil befindet.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser Zeichnung zeigen:
- FIG. 1:: eine perspektivische Darstellung eines Sitzträgers für ein Sitzgestell in Form eines Montagebildes und
- FIG. 2:: eine Darstellung des Sitzträgers ähnlich Fig. 1, jedoch nicht als Montagebild, sondern in zusammengesetzter Form, die Möglichkeit des Austausches der Traversen ist eingezeichnet.

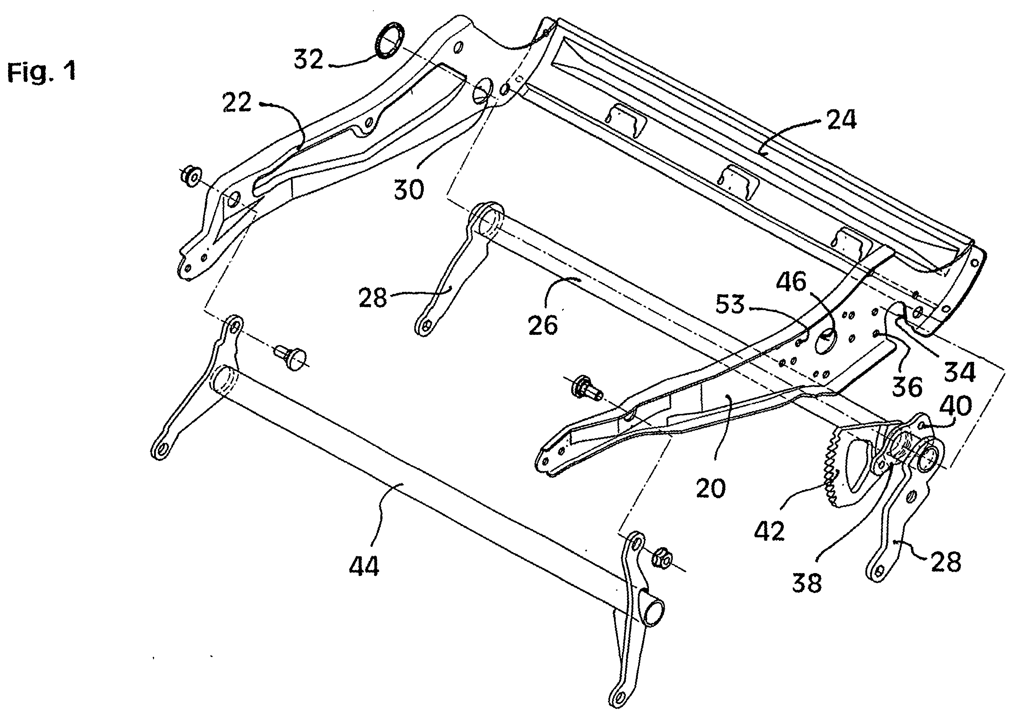

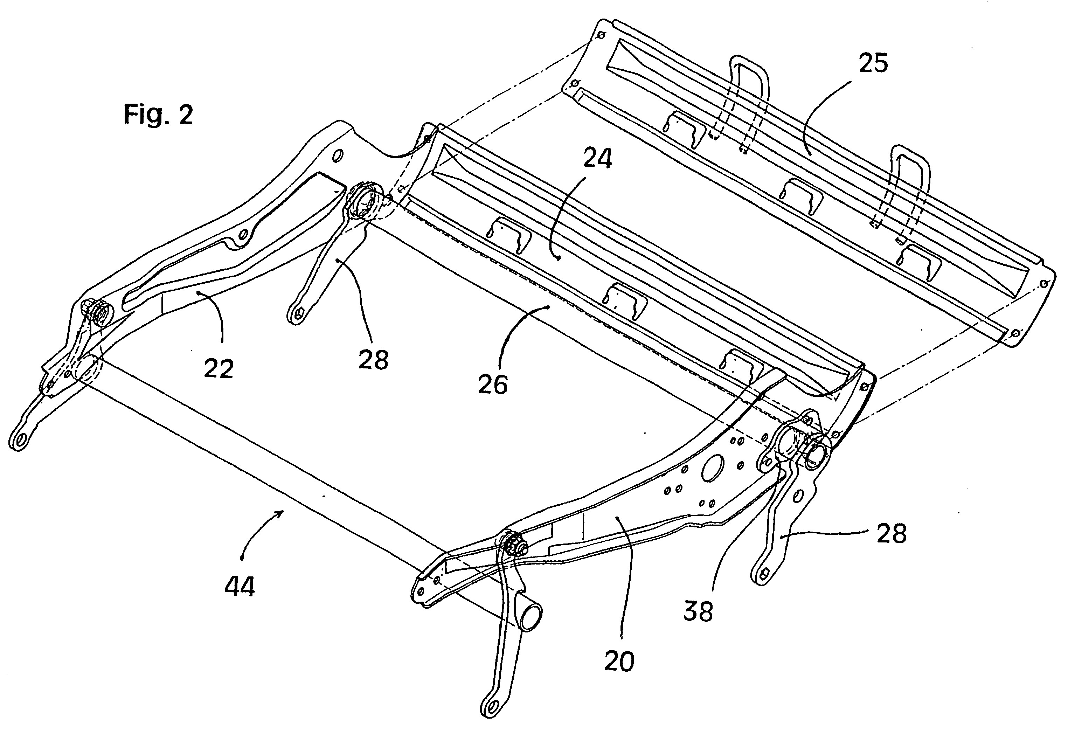

Wie aus Figur 1 und 2 ersichtlich ist, hat der Sitzträger ein linkes Seitenteil 20, ein rechtes Seitenteil 22 und eine rückwärtige Traverse 24. Die Bezeichnungen links und rechts sowie vorn und hinten werden immer im Bezug auf einen Passagier gesehen, der auf dem Sitzträger Platz nimmt.

Weiterhin gehört zum Sitzträger eine rückwärtige Querwelle 26, an der ein linker und ein rechter Stellarm 28 festgelegt sind, beispielsweise angeschweißt sind. Wie aus Figur 1 ersichtlich, steht jenseits des rechten Stellarms 28 die Querwelle 26 frei vor, so dass dieser freie Endbereich in eine Lagerbohrung 30 des rechten Seitenteils 22 eingesetzt werden kann. Mittels des eingezeichneten Sicherungsringes 32 erfolgt die Fixierung.

Das linke Seitenteil 20 hat eine Aufnahmebucht 34, die nach unten offen ist. Es sind links und rechts der Aufnahmebucht 34 jeweils Löcher vorgesehen, die als erste Befestigungsmittel 36 bezeichnet werden. Um die Querwelle 26 ist ein Lagerteil 38 angeordnet, das einerseits eine Lagerung der Querwelle 26 übernimmt und andererseits zweite Befestigungsmittel 40 ausbildet, die auch hier als Löcher ausgeführt sind. Das Lagerteil 38 ist so ausgeführt, dass es die Aufnahmebucht 34 überbrückt und nach Befestigung am zugehörigen, linken Seitenteil 20 die (eigentlich dort fehlende) Lagerbohrung für den linken Bereich der Querwelle 26 ausbildet. Im gezeigten Ausführungsbeispiel befindet sich das Lagerteil 38 nach der Montage auf der Innenseite des linken Seitenteils 20, also zwischen den beiden Seitenteilen 20, 22. Der linke Stellarm 28 befindet sich dagegen auf der Außenseite des linken Seitenteils 20.

Weiter inwärts auf der Querwelle 26, also vom Lagerteil 38 zum rechten Seitenteil 22 hingewandt ist ein Antriebsteil 42 mit der Querwelle 26 verbunden. Es ist in der konkreten Ausbildung mit einem Zahnbogen versehen, der mit einem Ritzel zusammenwirkt, auf das noch eingegangen wird, siehe Figur 3.

Aus der Beschreibung wird verständlich, dass die Querwelle 26 mit ihren beiden Stellarmen 28, dem Lagerteil 38 und dem Antriebsteil 42 als Baueinheit komplett vorgefertigt werden kann, die später, wie aus Figur 1 durch die strichpunktierte obere Montagelinie ersichtlich ist, in die vorgefertigte Einheit aus den beiden Seitenteilen 20, 22 und der rückwärtigen Traverse 24 eingefügt werden kann.

Wie Figur 1 und 2 zeigen, ist die rückwärtige Traverse 24 an insgesamt vier Verbindungspunkten mit den beiden Seitenteilen 20, 22 verbunden. Diese Verbindungspunkte sind lösbar, beispielsweise erfolgen sie über Schraubenverbindungen. Sie können auch durch entfernbare Niete realisiert sein. Ebenso kann die Verbindung des Lagerteils 38 mit dem Randbereich der Aufnahmebucht 34 mittels der Befestigungsmittel 36, 40 über Schweißen, Vernieten, Schrauben oder dergleichen erfolgen.

Wie Figur 2 zeigt, können zwei unterschiedliche Traversen 24, 25 eingesetzt werden. Die montiert dargestellte Traverse 24 ist eine normale Traverse. Sie hat in bekannter Weise Halterungen für die Aufnahme von Sitzfedern, die nach vom verlaufen. Sie sind hier nicht dargestellt. Durch Lösen der vier Verbindungspunkte, die entsprechend ausgeführt sind, kann die Traverse 24 ersetzt werden durch eine Traverse 25 mit Bügeln für eine Isofix-Befestigung. Dies ist durch die vier zueinander parallelen, strichpunktierten Montagelinien dargestellt. Die Traverse 25 unterscheidet sich mit Ausnahme der zwei Isofix-Bügel nicht von der Traverse 24.

In Figur 1 ist noch eine vordere Schwenkbrücke 44 eingezeichnet. Sie besteht aus einem Querrohr und zwei Schwenkstützen, die jeweils an ihrem oberen Ende und an ihrem unteren Ende eine Lagerbohrung haben und etwa in ihrem Mittelbereich durch das Querrohr fest miteinander verbunden sind. Auch diese Einheit kann vormontiert und nachträglich in die beschriebene Anordnung integriert werden, wie dies ebenfalls anhand der zwei unteren strichpunktierten Montagelinien deutlich wird. An den Endpunkten der beiden Montagelinien befinden sich jeweils Verbindungsmittel, die hier als Schrauben und Muttern ausgeführt sind.

Im vorderen Endbereich der beiden Seitenteile 20, 22 sind jeweils zwei Löcher vorgesehen, hier kann eine vordere Traverse (nicht dargestellt) angeordnet werden.

Wie sich aus Figur 1 und 2 ergibt, sind die beiden Seitenteile 20, 22 im wesentlichen spiegelbildlich baugleich, sie unterscheiden sich jedoch im Bereich der Lagerbohrung 30 bzw. der Aufnahmebucht 34. In Nähe der Aufnahmebucht 34 ist ein Loch im Seitenteil 20 vorgesehen, das hier als Lager 46 ausgebildet ist. Um dieses Lager 46 sind mehrere Befestigungslöcher vorgesehen. Im Bereich um das Lager 46 kann ein Elektromotor 48 angeflanscht werden. Er hat folgende Besonderheit: Sein Getriebegehäuse ist in dem, dem Seitenteil 20 zugewandten Bereich offen, dort fehlt also eine Gehäusewand des Getriebegehäuses. Das Seitenteil 20 übernimmt im Bereich um das Lager 46 herum die Funktion der fehlenden Gehäusewand des Getriebegehäuses. Auf diese Weise wird Gewicht gespart, es wird eine präzise Lagerung der Ausgangswelle des Elektromotors 48 im Seitenteil 20 erreicht und die Zuordnung zum Antriebsteil 42 ist günstig.

Es ist auch möglich, anstelle eines Lagers direkt im linken Seitenteil 20 ein entsprechend vergrößertes Lagerteil 38 einzusetzen, das zugleich auch noch die Lagerung der Ausgangswelle des Elektromotors 48 und den Abschluß des Getriebegehäuses übernimmt.

## Patentansprüche

1. Sitzgestell eines Fahrzeugsitzes mit einem Sitzträger, der zwei Seitenteile (20, 22) und eine rückwärtige Traverse (24) hat, wobei die Traverse lösbar mit den beiden Seitenteilen (20, 22) verbunden ist **dadurch gekennzeichnet, dass** zumindest zwei unterschiedliche Traversen (24, 25) vorgesehen und alternativ einsetzbar sind, nämlich eine normale Traverse (24) und eine Traverse, die mit Bügeln für eine Kleinkindaufnahme, insbesondere mit einer sogenannten Isofix-Anbindung, ausgestattet ist.

2. Sitzgestell nach Anspruch 1, **dadurch gekennzeichnet, dass** zwischen den beiden Seitenteilen (20, 22) mindestens eine Querwelle (26) für die Übertragung einer Verstellbewegung von einer Sitzseite auf die andere vorgesehen ist, dass mindestens ein Seitenteil (20) eine - vorzugsweise nach unten offene - Aufnahmebucht (34) hat, die die Querwelle (26) frei aufnimmt, dass neben der Aufnahmebucht (34) erste Befestigungsmittel (36) im Seitenteil vorgesehen sind und dass die Querwelle (26) von einem Lagerteil (38) umgriffen wird, das die Lagerung der Querwelle (26) übernimmt, die Aufnahmebucht (34) überbrückt und den ersten Befestigungsmitteln (36) entsprechende zweite Befestigungsmittel (40) ausbildet.

3. Sitzgestell nach Anspruch 2, **dadurch gekennzeichnet, dass** die Querwelle (26) vor ihrer Montage an den Seitenteilen (20, 22) mit zwei Verstellarmen (28) und einem Antriebsteil (42) verbunden wird.

4. Sitzgestell nach Anspruch 3, **dadurch gekennzeichnet, dass** sich das Lagerteil (38) zwischen einem Verstellarm (28) und einem Antriebsteil (42) befindet.

5. Sitzgestell nach Anspruch 2, **dadurch gekennzeichnet, dass** nur ein Seitenteil (20), vorzugsweise das sitzaußenseitige Seitenteil (20), mit der Aufnahmebucht (34) ausgestattet ist, dass das andere Seitenteil eine Lagerbohrung (30) für die Querwelle (26) aufweist, und dass die Querwelle (26) hierzu einen der Lagerbohrung (30) angepaßten Lagerbereich ausbildet, der sich an einem freien Ende der Querwelle (26) befindet.

6. Sitzgestell nach Anspruch 3, **dadurch gekennzeichnet, dass** sich der Verstellarm, der der Aufnahmebucht (34) benachbart ist, auf der Außenseite des diese Aufnahmebucht ausbildenden Seitenteils (20) befindet.

## Claims

1. A seat frame of a vehicle seat with a seat support having two side members (20, 22) and one rear cross member (24), said cross member being releasably connected to said two side members (20, 22), **characterized in that** at least two different cross members (24, 25) are provided for alternative utilization, namely one normal cross member (24) and one cross member that is equipped with bars for receiving an infant carrier, more specifically with what is termed an Isofix fitting system.

2. The seat frame in accordance with claim 1, **characterized in that**, between the two side members (20, 22), there is provided at least one transverse shaft (26) for transmitting adjusting movements from one seat side to the other, that at least one seat side (20) has a (preferably downwardly opening) receiving bight (34) for freely receiving said transverse shaft (26), that first securing means (36) are provided in the side member next to the receiving bight (34) and that said transverse shaft (26) is surrounded by a bearing member (38) that carries said transverse shaft (26), straddles said receiving bight (34) and forms second securing means (40) for mating with said first securing means (36).

3. The seat frame in accordance with claim 2, **characterized in that**, prior to being mounted to the side members (20, 22), the transverse shaft (26) is connected to two adjusting arms (28) and to a drive member (42).

4. The seat frame in accordance with claim 3, **characterized in that** the bearing member (38) is located between an adjusting arm (28) and a drive member (42).

5. The seat frame in accordance with claim 2, **characterized in that** but one side member (20), preferably the side member (20) located on the outer side of the seat, is equipped with the receiving bight (34), that the other side member comprises a bearing hole (30) for the transverse shaft (26) and that said transverse shaft (26) forms therefore a bearing area that is adapted to said bearing hole (30) and is located at a free end of said transverse shaft (26).

6. The seat frame in accordance with claim 3, **characterized in that** the adjusting arm, which is disposed in the neighborhood of the receiving bight (34), is located on the outer side of the side member (20) forming the receiving bight.

## Revendications

1. Bâti de siège d'un véhicule automobile avec un support de siège ayant deux parties latérales (20, 22) et une traverse arrière (24), la traverse étant solidarisée de façon amovible aux deux parties latérales (20, 22), **caractérisé en ce qu'**au moins deux traverses (24, 25) différentes aptes à être utilisées alternativement sont prévues, à savoir une traverse normale (24) et une traverse munie de brides destinées à recevoir un siège bébé, notamment du type comportant un système d'ancrage connu sous le nom d'Isofix.

2. Bâti de siège selon la revendication 1, **caractérisé en ce qu'**est prévu, entre les deux parties latérales (20, 22), au moins un arbre transversal (26) destiné à transmettre un mouvement de réglage d'un côté du siège à l'autre, qu'au moins une partie latérale (20) a une découpe de réception (34) de préférence ouverte vers le bas destinée à recevoir librement l'arbre transversal (26), que sont prévus dans la partie latérale, à côté de la découpe de réception (34), des premiers moyens de fixation (36) et que l'arbre transversal (26) est enserré par une pièce formant palier (38) qui se charge de supporter l'arbre transversal (26), enjambe la découpe de réception (34) et forme des seconds moyens de fixation (40) conjugués des premiers moyens de fixation (36).

3. Bâti de siège selon la revendication 2, **caractérisé en ce que** l'arbre transversal (26) est relié à deux barres de réglage (28) et à une partie motrice (42) avant d'être monté sur les parties latérales (20, 22).

4. Bâti de siège selon la revendication 3, **caractérisé en ce que** la pièce formant palier (38) est située entre une barre de réglage (28) et une partie motrice (42).

5. Bâti de siège selon la revendication 2, **caractérisé en ce qu'**une partie latérale (20) seulement, de préférence la partie latérale (20) située sur le côté extérieur du siège, est munie de la découpe de réception (34), que l'autre partie latérale comporte un alésage de support (30) de l'arbre transversal (26) et que l'arbre transversal (26) forme à cet effet une zone de support qui est adaptée à l'alésage de support (30) et se situe à une extrémité libre de l'arbre transversal (26).

6. Bâti de siège selon la revendication 3, **caractérisé en ce que** la barre de réglage, voisine de la découpe de réception (34), se situe sur la face externe de la partie latérale (20) formant ladite découpe de réception.
